(19) Europäisches Patentamt
European Patent Office
Office européen des brevets

(11) EP 3 760 301 A1

(12) EUROPEAN PATENT APPLICATION
published in accordance with Art. 153(4) EPC

(43) Date of publication:
06.01.2021 Bulletin 2021/01

(51) Int Cl.:
B01D 69/10 (2006.01)          B01D 69/02 (2006.01)
B01D 71/24 (2006.01)          B01D 71/28 (2006.01)
B01D 71/42 (2006.01)          C08L 51/04 (2006.01)
C08L 55/02 (2006.01)          C08L 101/00 (2006.01)

(21) Application number: 19760463.0

(22) Date of filing: 28.02.2019

(86) International application number:
PCT/JP2019/007959

(87) International publication number:
WO 2019/168134 (06.09.2019 Gazette 2019/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.02.2018 JP 2018034863
28.02.2018 JP 2018034864

(71) Applicant: Toray Industries, Inc.
Tokyo, 103-8666 (JP)

(72) Inventors:
• TAKAYA, Kiyohiko
Otsu-shi, Shiga 520-8558 (JP)
• NISHIGUCHI, Yoshiki
Otsu-shi, Shiga 520-8558 (JP)
• FURUNO, Shuji
Otsu-shi, Shiga 520-8558 (JP)
• YAMADA, Hiroyuki
Otsu-shi, Shiga 520-8558 (JP)

(74) Representative: Hoefer & Partner Patentanwälte
mbB
Pilgersheimer Straße 20
81543 München (DE)

(54) COMPOSITE SEMIPERMEABLE MEMBRANE AND PRODUCTION METHOD FOR COMPOSITE SEMIPERMEABLE MEMBRANE

(57) The present invention relates to a composite semipermeable membrane comprising a substrate, a support layer, and a separation function layer, wherein: the support layer includes particles and a thermoplastic resin having a porous structure; the particles are present in the thermoplastic resin and contain at least one material selected from the group consisting of a diene polymer, an acrylic polymer, and an ethylenic polymer; and in a cross section of the support layer, taken in the layer thickness direction, 6 or more of the particles are present in an area which is 3 $\mu$m from the surface of the support layer in the layer thickness direction and 3 $\mu$m in the direction along which such surface extends.

Fig.1

WIDTH 3 μm
THICKNESS 3 μm
2
3
1
11

**Description**

TECHNICAL FIELD

The present invention relates to a composite semipermeable membrane useful for selective separation of liquid mixtures and a production method for the composite semipermeable membrane. The composite semipermeable membrane obtained by the present invention can be suitably used for, for example, desalination of seawater and brine.

BACKGROUND ART

Regarding the separation of a mixture, there are various techniques for removing substances (e.g., salts) dissolved in a solvent (e.g., water). In recent years, the utilization of a membrane separation method has been expanded as a process for energy saving and resource saving. Examples of a membrane used for the membrane separation method include a microfiltration membrane, an ultrafiltration membrane, a nanofiltration membrane, a reverse osmosis membrane, and the like. These membranes can be used for, for example, obtaining drinking water from seawater, brine, water containing harmful substances, or the like, production of industrial ultrapure water, wastewater treatment, collection of valuables, and the like.

Most of the currently commercially available reverse osmosis membranes and nanofiltration membranes are a composite semipermeable membrane, and there are two kinds of composite semipermeable membranes: one kind of composite semipermeable membrane includes, on a support membrane, a gel layer and an active layer obtained by crosslinking polymers; and the other one kind of composite semipermeable membrane includes, on a support membrane, an active layer obtained by polycondensing monomers. Among them, a composite semipermeable membrane, which is obtained by coating a support membrane with a separation functional layer formed of a crosslinked polyamide obtained by a polycondensation reaction between a polyfunctional amine and a polyfunctional acid halide, has been widely used as a separation membrane having a high water permeability and high salt removal performances (Patent Literature 1).

The composite semipermeable membrane has been widely used as a spiral composite semipermeable membrane element which is wound around a cylindrical water collection pipe, which is provided with a large number of pores, together with a raw-water flow path material such as a plastic net, a permeated water flow path material such as a tricot, and a film for increasing the pressure durability as required.

When the separation is performed by using a composite semipermeable membrane, the membrane is required to have mechanical strength. For example, when impurities contained in water are deposited on a surface of the composite semipermeable membrane and clogging of the composite semipermeable membrane is caused or the production efficiency of pure water is lowered, a method for flushing a composite semipermeable membrane with a high-pressure water stream may be employed. In this case, when the strength of the composite semipermeable membrane is low, the membrane is peeled off and damaged, and thus a satisfactory salt removal ratio cannot be obtained. The support membrane generally includes a substrate and a porous support body, and the peeling is likely to occur in the vicinity of an interface between the substrate and the porous support body.

Patent Literature 2 discloses that a high water permeability and a flow rate in a permeation direction is improved, and fouling durability and chemical durability are ensured by a polyamide layer.

Patent Literature 3 discloses a semipermeable membrane support body made of a nonwoven fabric for forming a membrane.

Patent Literature 4 discloses that polyvinyl chloride and a chlorinated PVC resin are used for a porous support body of a composite semipermeable membrane.

Patent Literature 5 discloses an example in which an ABS resin (acrylonitrile-butadiene-styrene) is used for a porous support body of a composite semipermeable membrane.

CITATION LIST

PATENT LITERATURE

Patent Literature 1: JP-A-H5-76740
Patent Literature 2: JP-A-2009-233666
Patent Literature 3: JP-A-S61-222506
Patent Literature 4: JP-A-2000-296317
Patent Literature 5: WO 2014/192883

SUMMARY OF INVENTION

TECHNICAL PROBLEM

An object of the present invention is to provide a composite semipermeable membrane having a high water permeability.

SOLUTION TO PROBLEM

In order to attain the above object, the present invention comprises following features.

[1] A composite semipermeable membrane, including:

a substrate;
a support layer arranged on the substrate; and
a separation functional layer arranged on the support layer,
wherein the support layer contains a thermoplastic resin having a porous structure, and particles,
the particles are present in the thermoplastic resin and contain at least one kind of material selected from the group consisting of a diene-based polymer, an acrylic polymer, and an ethylene-based polymer, and
in a cross-section of the support layer, cut along a thickness direction of the support layer, 6 or more particles are present within an area of 3 $\mu$m in the thickness direction from a surface of the support layer and 3 $\mu$m in a direction along the surface.

[2] The composite semipermeable membrane according to [1], in which 9 or more particles are present in the area.
[3] The composite semipermeable membrane according to [2], in which 12 or more particles are present in the area.
[4] The composite semipermeable membrane according to any one of [1] to [3], in which the particles contain a graft copolymer, and
the graft copolymer is a polymer of the diene-based polymer and a monomer that is radically polymerizable with the diene-based polymer.
[5] The composite semipermeable membrane according to [4], in which the monomer is a vinyl cyanide-based monomer and an aromatic vinyl-based monomer.
[6] The composite semipermeable membrane according to [5], in which the monomer is acrylonitrile and styrene.
[7] The composite semipermeable membrane according to any one of [1] to [6], in which the thermoplastic resin is a polymer of a vinyl cyanide-based monomer and an aromatic vinyl-based monomer.
[8] The composite semipermeable membrane according to [7], in which the thermoplastic resin is a copolymer of acrylonitrile and styrene.
[9] The composite semipermeable membrane according to any one of [1] to [8], in which a weight average molecular weight Mw of the thermoplastic resin is 60,000 or more and 140,000 or less.
[10] The composite semipermeable membrane according to any one of [1] to [9], in which the amount of insoluble components per volume of the support layer, which is obtained by dissolving the support layer in acetone, is 60 mg/m$^2\cdot\mu$m or more.
[11] The composite semipermeable membrane according to [10], in which the amount of insoluble components is 66 mg/m$^2\cdot\mu$m or more.
[12] A production method for the composite semipermeable membrane according to any one of [1] to [11], the method including:

a process for forming the support layer including:

(i) a step of preparing a resin solution containing the particles and the thermoplastic resin at a weight ratio within a range of 30 : 70 to 50 : 50;
(ii) a step of coating the substrate with the resin solution; and
(iii) a step of coagulating the thermoplastic resin by immersing the substrate coated with the resin solution in a coagulation bath, and

a process for forming the separation functional layer on the support layer formed by the process for forming the support layer.

[13] The production method for the composite semipermeable membrane according to [12], in which the resin solution contains an ethylene-carbon monoxide-(meth)acrylic acid ester copolymer.

ADVANTAGEOUS EFFECTS OF INVENTION

The composite semipermeable membrane of the present invention contains certain amount or more of particles containing at least one kind of material selected from the group consisting of a diene-based polymer, an acrylic polymer, and an ethylene-based polymer. The composite semipermeable membrane thus has high water permeability even when used under low pressure conditions.

BRIEF DESCRIPTION OF DRAWINGS

[Fig. 1] Fig. 1 shows an example of an image of a cross-section of a support layer in the present invention which is cut along a thickness direction.
[Fig. 2] Fig. 2 shows an example of an image of a cross-section of a stained support layer in the present invention which is cut along a thickness direction.

DESCRIPTION OF EMBODIMENTS

1. Composite semipermeable membrane

The composite semipermeable membrane according to the present invention includes a substrate, a support layer arranged on the substrate, and a separation functional layer arranged on the support layer. Hereinafter, a membrane including the substrate and the support layer is referred to as "support membrane" below.

(1-1) Support membrane

The support membrane does not have substantial ability of separating ions, and imparts strength to the composite semipermeable membrane.

(1-1-1) Substrate

Examples of the substrate include a polyester-based polymer, a polyamide-based polymer, a polyolefin-based polymer, mixtures or copolymers thereof, and the like. Among them, a fabric formed of a polyester-based polymer having high mechanical and thermal stability is particularly preferred. As the form of the fabric, a long fiber nonwoven fabric or a short fiber nonwoven fabric, and a woven or knitted fabric can be preferably used. The term "long-fiber nonwoven fabric" means a nonwoven fabric having an average fiber length of 300 mm or longer and an average fiber diameter of 3 $\mu$m to 30 $\mu$m.

The substrate preferably has an air permeability of 0.5 cc/cm$^2$/sec or more and 5.0 cc/cm$^2$/sec or less. When the air permeability of the substrate is within the above range, the substrate is impregnated with a polymer solution which is to form the support layer. Therefore, the adhesion between the support layer and the substrate is improved, and the physical stability of the support membrane can be enhanced.

The air permeability can be measured by a Frazier tester based on JIS L1096 (2010).

For example, a substrate is cut to have a size of 200 mm $\times$ 200 mm and is used as a sample. The sample is placed in the Frazier tester, followed by adjusting a suction fan and an air hole such that an inclined barometer reaches pressure of 125 Pa, and the amount of air passing through the substrate, that is, the air permeability can be calculated from the pressure indicated by a vertical barometer at this time and the kind of air holes used. As the Frazier tester, KES-F8-AP1 manufactured by KATO TECH CO., LTD. and the like can be used.

The substrate has a thickness of preferably 20 $\mu$m or more and 200 $\mu$m or less, more preferably 40 $\mu$m or more, and more preferably 120 $\mu$m or less.

The thickness of the substrate can be measured by a dial thickness gauge or a digital thickness gauge. As the dial thickness gauge or the digital thickness gauge, PEACOCK manufactured by OZAKI MFG.CO., LTD., products manufactured by TECLOCK CO., LTD., and the like can be used. When the dial thickness gauge or the digital thickness gauge is used, thicknesses of any 20 locations are measured, and an arithmetic mean of the thicknesses of the 20 locations is calculated and is regarded as the thickness of the substrate.

When it is difficult to measure the thickness of the substrate by a dial thickness gauge or a digital thickness gauge, the thickness of the substrate may be measured by an optical microscope or a scanning electron microscope.

(1-1-2) Support layer

The support layer includes a thermoplastic resin having a porous structure, and particles (hereinafter, may be referred to as "rubber particles") containing at least one kind of material selected from the group consisting of a diene-based polymer, an acrylic polymer, and an ethylene-based polymer.

The thermoplastic resin is a polymer compound that deforms or flows due to an external force when heated. The thermoplastic resin has a porous structure. The rubber particles are present in the thermoplastic resin.

In a cross-section of the support layer, cut along the thickness direction of the support layer, 6 or more rubber particles are present within an area (hereinafter, may be referred to as "area X") of 3 $\mu$m in the thickness direction from a surface of the support layer and 3 $\mu$m in a direction along the surface.

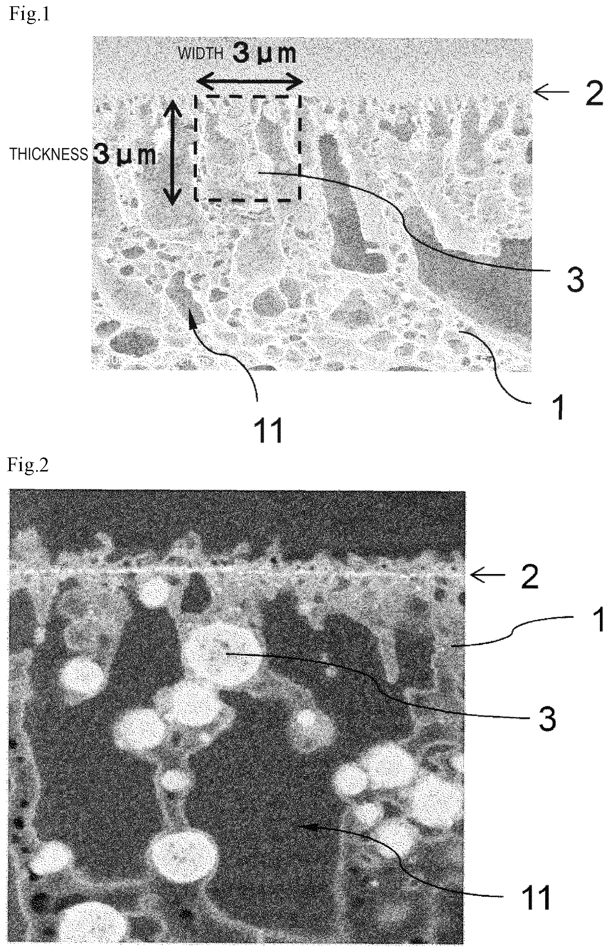

Fig. 1 shows an example of an image of a cross-section of a support layer in the present invention, which is cut along the thickness direction. As a result of intensive studies, the present inventors have found that the water permeability of the composite semipermeable membrane is improved by setting the number of particles within the above range. In the vicinity of the surface of the support layer, the pore diameter tends to be relatively small. A part having such a small pore diameter is referred to as a dense layer. Although the reason for improvement in the water permeability is not clear, it is considered that this is because the dense layer becomes sparse and a flow path of the permeated water is formed due to the presence of 6 or more rubber particles in the area X. In addition, the number of particles in the area X is preferably 9 or more, and more preferably 12 or more.

Patent Literature 5 only describes an evaluation result under a high-pressure condition of 5.5 MPa, and it is considered that the membrane in Patent Literature 5 has a lower water permeability under a low-pressure condition since the water permeability of the support membrane affects the performances of the composite semipermeable membrane under the low-pressure condition.

The number of the rubber particles can be measured by the following method.

First, the composite semipermeable membrane or the support membrane is dried at 25°C. Subsequently, the composite semipermeable membrane or the support membrane is cut in a direction vertical to a membrane surface by a freeze fracture method to produce 10 section samples. The 10 section samples are observed in cross-sections at a magnification of 10,000 times to 30,000 times by a scanning electron microscope (SEM). At this time, the sample is placed such that the surface of the support layer (the surface to be in contact with the separation functional layer) is at a position of 10% to 20% from the upper portion of the image. The number of particles is counted, which fall within any area of 3 $\mu$m in the thickness direction from the surface of the support layer of the obtained image and 3 $\mu$m in a direction along the above surface, and which have a Krumbein diameter of 50 nm or more.

Here, 20 images are obtained for one membrane by observing two view fields for one section sample, and an arithmetic mean of 20 pieces of particle-number data obtained from each of these images is calculated and is regarded as the number (rounded down decimal points) of rubber particles that are present in the cross-section of the support layer. Fig. 1 shows an example of an image of a cross-section of the support layer in the present invention, which is cut along the thickness direction.

Before being observed by SEM, the sample is preferably stained with osmium tetroxide. When osmium tetroxide is used, a contrast can be imparted to rubber particles, and the number of rubber particles is easily counted. The sample may be further stained with ruthenium tetroxide. As SEM, an S-5500 scanning electron microscope manufactured by HITACHI HIGH-TECHNOLOGIES CORPORATION can be used, and observation is performed at an acceleration voltage of 3 kV to 6 kV. Fig. 2 shows an example of an image of a cross-section of a stained support layer in the present invention which is cut along the thickness direction. Figs. 1 and 2 are captured at different magnifications.

When Energy Dispersive X-ray Spectroscopy (SEM-EDX) or the like is utilized, a contrast can also be imparted to the rubber particles, based on differences in compositions of the rubber particles and the thermoplastic resin, without performing staining.

As described, the support layer is a composite of a porous body formed of the thermoplastic resin as a base material, and the rubber particles dispersed in the porous body. The support layer itself, which is a composite, is also porous.

At least a part of the surface of the rubber particles is preferably in contact with a solid part of the thermoplastic resin constituting the porous body. More specifically, 30% or more of a surface area of the rubber particles is preferably in contact with the solid part of the thermoplastic resin. A cross-sectional image is obtained in the same manner as the measurement of the number of the rubber particles, and the rubber particles are determined to be in contact with the solid part of the thermoplastic resin if there are no space between the rubber particles and the thermoplastic resin in the image.

In the measurement of the number of rubber particles described above, the number of the rubber particles having the Krumbein diameter of 50 nm or more is measured, and the Krumbein diameter of rubber particles to be measured herein is preferably 2 $\mu$m or less or 1 $\mu$m or less.

When the support layer is dissolved in acetone, the amount of insoluble components, contained in the support layer, per volume is preferably 60 mg/m$^2$·$\mu$m or more, more preferably 66 mg/m$^2$·$\mu$m or more, and still more preferably 72 mg/m$^2$·$\mu$m or more. The insoluble components include rubber particles, other elastomers, and additives. It is considered that when these components are present inside the support layer in a certain amount or more, so that communication of pores on the surface of the support layer or inside the support layer is improved, and the number of the pores is increased, and thus a flow path of the permeated water is formed.

When measuring the amount of insoluble components contained in a support layer of a composite semipermeable membrane in which a polyamide functional layer is formed, the amount of the insoluble components can be determined by the following method.

First, a composite semipermeable membrane cut in a predetermined area is washed well with warm water, and is air-dried at a room temperature. Next, the dried composite semipermeable membrane is brought into contact with acetone (in which a substrate and a functional layer are not dissolved but a support layer can be dissolved), and thus only the support layer is dissolved. Subsequently, the obtained solution is filtered through a metal mesh (wire diameter: 0.03 mm, mesh: 300, and manufactured by KANSAI WIRE NETTING CO., LTD.) to remove the substrate and the functional layer. The obtained filtrate is centrifuged at 8,800 r.p.m. (10,000 G or more) for 40 minutes, followed by removing the supernatant, and the precipitate accumulated at the bottom is dried under vacuum at 40°C for 8 hours. Finally, the weight of the precipitate after drying is measured, and the amount of insoluble components is calculated from the following formula.

Insoluble component amount [mg/m$^2$·$\mu$m] = (weight [mg] / support membrane area [m$^2$]) / support layer thickness [$\mu$m]

Specific examples of the diene-based polymer, the acrylic polymer, and the ethylene-based polymer contained in the rubber particles include polybutadiene, poly(butadiene-styrene), poly(butadiene-acrylonitrile), polyisoprene, poly(butadiene-methyl acrylate), poly(butadiene-ethyl acrylate), poly(butadiene-butyl acrylate), poly(butadiene-methyl methacrylate), ethylene-propylene rubber, ethylene-propylene-diene rubber, poly(ethylene-isobutylene), poly(ethylene-methyl acrylate), poly(ethylene-ethyl acrylate).

As far as the rubber particles contains at least one kind of material selected from these examples, the rubber particles may contain any components and may contain a plurality of materials.

The weight average particle size of the rubber particles is preferably within a range of 100 nm to 2,000 nm. When the weight average particle size is within this range, the rubber particles can be uniformly dispersed, and the support layer can easily contain the rubber particles.

The rubber particles are dispersed in an aqueous medium, and the particle size distribution of the rubber particles is measured by a laser diffraction particle sizing analyzer (LS 13 320 manufactured by BECKMAN COULTER CORPORATION), so as to calculate the weight average particle size of the rubber particles. In the case of the weight average particle size of the rubber particles contained in the support layer, the insoluble components obtained when the amount of insoluble components contained in the support layer is measured are dispersed in water, and the particle size distribution is measured by a laser diffraction particle sizing analyzer, thereby calculating the weight average particle size.

The rubber particles are preferably graft copolymer-containing rubber particles having a salami structure obtained by graft copolymerization of radically polymerizable monomers with rubber particles, block copolymer-containing rubber particles obtained by block copolymerization of radically polymerizable monomers with rubber particles, core-shell rubbers having a layered structure composed of rubber particles, styrene-based monomers, unsaturated carboxylic acid alkyl ester monomers, and the like, and an onion structure which has a multilayer structure formed by rubber particles belonging in-between the above salami structure and the above core-shell structure and other resin components, and more preferably graft copolymer-containing rubber particles.

The above graft copolymer is preferably a polymer of a diene-based polymer and a monomer that is radically polymerizable with the diene-based polymer (e.g., a vinyl cyanide-based monomer and an aromatic vinyl-based monomer).

The graft copolymer-containing rubber particles are preferably graft copolymer-containing rubber particles obtained by copolymerization of vinyl cyanide-based monomers and aromatic vinyl-based monomers with particles composed of diene-based polymers. The rubber particles may further contain other one or more kinds of vinyl-based monomers copolymerized with these vinyl cyanide-based monomers and aromatic vinyl-based monomers.

Examples of the vinyl cyanide-based monomer include acrylonitrile, methacrylonitrile, eta-acrylonitrile, and the like, and acrylonitrile is preferably used. These vinyl cyanide-based monomers are not necessarily used in one kind, and two or more kinds thereof may be used in combination.

Examples of the aromatic vinyl-based monomer include styrene, $\alpha$-methylstyrene, p-methylstyrene, vinyl toluene, t-butyl styrene, o-ethylstyrene, o-chlorostyrene, o,p-dichlorostyrene, and the like, and styrene and $\alpha$-methylstyrene are particularly preferable used. These aromatic vinyl-based monomers are not necessarily used in one kind, and two or more kinds thereof may be used in combination.

Examples of other copolymerizable vinyl-based copolymers include an unsaturated carboxylic acid alkyl ester such as methyl methacrylate, ethyl methacrylate, n-propyl methacrylate, n-butyl methacrylate, t-butyl methacrylate, n-hexyl methacrylate, cyclohexyl methacrylate, chloromethyl methacrylate, 2-chloroethyl methacrylate, 2-hydroxyethyl methacrylate, 3-hydroxypropyl methacrylate, 2,3,4,5,6-pentahydroxy methacrylate, and 2,3,4,5-tetrahydroxypentyl methacrylate, an unsaturated amide such as acrylamide, a maleimide compound such as N-maleimide, N-cyclohexylmaleimide, and N-phenylmaleimide. Among them, the unsaturated carboxylic acid alkyl ester is preferably used, and methyl methacrylate is more preferably used. These vinyl copolymers are not necessarily used in one kind, and two or more kinds thereof may be used in combination.

The grafting ratio of the graft copolymer-containing rubber particles is preferably within a range of 10 wt% to 80 wt%. When the grafting ratio is less than 10 wt%, the pressure durability of the support layer may decrease, and when the grafting ratio is more than 80 wt%, the moldability of the support layer may deteriorate, and defects may be likely to occur. The grafting ratio can be determined by the following method.

First, 100 mL of acetone is added to a predetermined amount (m; about 1 g) of the graft copolymer-containing rubber particles, which are dried under vacuum at 80°C for 4 hours, and the mixture refluxes for 3 hours in a water bath of 70°C. Next, this solution is centrifuged at 8,800 r.p.m (10,000 G or more) for 40 minutes, followed by removing the supernatant, and the precipitate is dried under vacuum at 40°C for 8 hours. Finally, the weight (n) of the precipitate after drying is measured. The grafting ratio is calculated by the following formula. Here, L is the rubber content (wt%) of the graft copolymer-containing rubber particles.

$$\text{Grafting ratio [\%]} = \{[(n) - ((m) \times L/100)]/[(m) \times L/100]\} \times 100$$

The proportion of the vinyl cyanide-based monomers in the vinyl-based monomers constituting a graft part of the graft copolymer-containing rubber particles is preferably 5 wt% to 60 wt%, and more preferably 10 wt% to 40 wt%.

The proportion of the aromatic vinyl-based monomers in the vinyl-based monomers constituting a graft part of the graft copolymer-containing rubber particles is preferably 40 wt% to 95 wt%, and more preferably 60 wt% to 90 wt%.

The proportion of other vinyl-based monomers in the vinyl-based monomers constituting a graft part of the graft copolymer-containing rubber particles is preferably 0 wt% to 30 wt%.

The thermoplastic resin forms a basic structure of the support layer (that is, base material), and is an acrylonitrile styrene (AS) resin, or an acrylonitrile-butadiene-styrene (ABS) resin. When the rubber particles are graft copolymer-containing rubber particles, the AS resin contained in the base material is preferably a polymer (vinyl-based copolymer) of a vinyl cyanide-based monomer and an aromatic vinyl-based monomer. One or more kinds of vinyl-based monomers, which are selected from other vinyl-based monomers copolymerizable with the vinyl cyanide-based monomer and aromatic vinyl-based monomer, may be copolymerized therewith. The vinyl cyanide-based monomers, the aromatic vinyl-based monomers, and other vinyl-based monomers copolymerizable with them, which constitute the vinyl-based copolymers, are respectively selected from the monomers described in the sections of the graft copolymer-containing rubber particles, and may be the same as, or may be different from the monomers used in the graft copolymer-containing rubber particles, however, they are preferably the same.

The proportion of the vinyl cyanide-based monomers in the vinyl-based monomers constituting the vinyl-based copolymer is preferably 5 wt% to 60 wt%, and more preferably 10 wt% to 40 wt%.

The proportion of the aromatic vinyl-based monomers in the vinyl-based monomers constituting the vinyl-based copolymer is preferably 40 wt% to 95 wt%, and more preferably 60 wt% to 90 wt%. When the proportion of the aromatic vinyl-based monomers is less than 40 wt%, the moldability of the support layer may decrease, and when the proportion thereof is more than 95 wt%, the pressure durability of the support layer may decrease.

The proportion of other vinyl-based monomers in the vinyl-based monomers constituting the vinyl-based copolymer is preferably 0 wt% to 30 wt%. When the proportion of other vinyl-based monomers is more than 30 wt%, the pressure durability of the support layer may decrease.

The support layer preferably contains an ethylene-carbon monoxide-(meth)acrylic acid ester copolymer. When the support layer contains the ethylene-carbon monoxide-(meth)acrylic acid ester copolymer, not only the number of rubber particles fall within the area X is easily increased, but also the support layer structure becomes uniform and the composite semipermeable membrane has a high removal ratio.

In the present invention, the term "(meth)acrylic" means acrylic or methacrylic.

The content of the ethylene-carbon monoxide-(meth)acrylic acid ester copolymer in the support layer is preferably 1.0 parts by weight or more and 10.0 parts by weight or less relative to 100 parts by weight of the thermoplastic resin. When the content is 1.0 parts by weight or more, an effect of increasing the number of rubber particles can be obtained, and when the content is 10.0 parts by weight or less, the moldability of the support layer can be maintained.

The (meth)acrylic acid ester in the ethylene-carbon monoxide-(meth)acrylic acid ester copolymer may be linear or branched, and preferably has 1 to 18 carbon atoms on a side chain. Examples of an alkyl group on the side chain of the (meth)acrylic acid ester include a methyl group, an ethyl group, a n-propyl group, a n-butyl group, a sec-butyl group, a t-butyl group, an isobutyl group, a hexyl group, a 2-ethylhexyl group, an octyl group, a dodecyl group, an undecyl group, a stearyl group, and the like, and the alkyl group having 2 to 8 carbon atoms is preferred. The respective composition ratios of the ethylene-carbon monoxide-(meth)acrylic acid ester copolymer are 10 wt% to 85 wt% of ethylene, 5 wt% to 40 wt% of carbon monoxide, and 10 wt% to 50% wt% of (meth)acrylic acid ester, and if necessary, other copolymerizable monomers can also be copolymerized therewith .

The weight average molecular weight (Mw) of the thermoplastic resin in the support layer is preferably 60,000 or more and 140,000 or less, and more preferably 100,000 or more and 140,000 or less. When Mw is 60,000 or more and 140,000 or less, preferred mechanical strength and heat durability can be obtained for the support layer.

The above weight average molecular weight (Mw) can be measured by the following method. First, a support membrane or a composite semipermeable membrane cut in a predetermined area is washed well with warm water, and is air-dried at a room temperature. Next, only the support layer is dissolved by bringing it into contact with THF, and the obtained solution is filtered through a metal mesh (wire diameter: 0.03 mm, mesh: 300, and manufactured by KANSAI WIRE NETTING CO., LTD.) to remove the substrate and the functional layer. Subsequently, the obtained filtrate is 8,800 r.p.m (10,000 G or more) for 40 minutes, and then the supernatant is separated and collected. The obtained supernatant is measured by gel permeation chromatography (GPC) with THF used as a solvent and polystyrene used as a standard substance, so as to determine the weight average molecular weight.

The thickness of the support layer is preferably 10 $\mu$m or more and 100 $\mu$m or less. When the thickness of the support layer is 10 $\mu$m or more, the substrate is hardly exposed, and when the thickness thereof is 100 $\mu$m or less, the flow resistance due to the thickness of the support layer can be kept small.

The thickness of the support layer can be controlled by the kinds of the solvent for dissolving the thermoplastic resin, the viscosity of the thermoplastic resin solution, the concentration of the thermoplastic resin solution, the temperature of the coagulation bath, the thickness of the thermoplastic resin solution applied to the substrate, and the like.

The thickness of the support layer can be measured by the cross-sectional observation by SEM or an optical microscope. Even in the case of a composite semipermeable membrane, the thickness of the separation functional layer is much smaller as compared with that of the substrate or the support layer, so that the thickness of the support layer can be determined from the results of the cross-sectional observation of the composite semipermeable membrane.

When measured by SEM, the thickness of the support layer can be measured by the following method. A composite semipermeable membrane or a support membrane is cut by a freeze fracture method to produce section samples, and the section samples are observed in cross-sections by SEM at a magnification of 100 times to 500 times. From the obtained image, thicknesses of any 10 points (which may be measured at an interval of 10 $\mu$m) are measured in a direction (a plane direction of a membrane) perpendicular to the thickness direction by a scale or a caliper. The same operation is performed on five section samples, and an arithmetic mean of data from the 50 points is calculated and is regarded as the thickness of the support layer. Before the observation with SEM, the sample is thinly coated with platinum, platinum-palladium, or ruthenium tetroxide. As SEM, an S-5500 scanning electron microscope manufactured by HITACHI HIGH-TECHNOLOGIES CORPORATION can be used, and observation is performed at an acceleration voltage of 3 kV to 6 kV.

The thickness of the support membrane and the thickness of the support layer can also be measured by a dial thickness gauge or a digital thickness gauge in the same manner as the substrate. The thickness of the separation functional layer is so small as compared with that of the substrate or the support layer that the thickness of the composite semipermeable membrane can be regarded as the total thickness of the substrate and the support layer (thickness of the support membrane). Therefore, the thickness of the support layer can be easily calculated by measuring the thickness of the composite semipermeable membrane by a dial thickness gauge or a digital thickness gauge and subtracting the thickness of the substrate from the thickness of the composite semipermeable membrane. When the dial thickness gauge or the digital thickness gauge is used, thicknesses of any 20 locations are measured, and an arithmetic mean of the thicknesses of any 20 locations is calculated.

The thickness of the support membrane (the total thickness of the substrate and the support layer) affects the strength of the composite semipermeable membrane and the packing density of the composite semipermeable membrane incorporated into an element. In order to obtain the sufficient mechanical strength and packing density, the total thickness of the support membrane is preferably 30 $\mu$m or more and 300 $\mu$m or less, and more preferably 80 $\mu$m or more and 200 $\mu$m or less.

The pure water permeation coefficient of the support membrane is preferably $1.0 \times 10^{-9} \mathrm{m}^3/\mathrm{M}^2 \cdot \mathrm{s} \cdot \mathrm{Pa}$, 25°C or more.

The pure water permeation coefficient of the support membrane can be determined by the following method. First, the support membrane is washed well with pure water. Next, a sample is cut into a circle having a diameter of 4.3 cm, and the cut sample is set in a stirring ultra holder (UHP-43K manufactured by ADVANTECH TOYO CO., LTD.). Subsequently, pure water of 25°C is put in a cell, a cap is mounted, and then the pressure is raised to 100 kPa with nitrogen or compressed air. Finally, the pure water permeation amount in the constant time is measured, and the pure

water permeation coefficient ($\times$ 10$^{-9}$ m$^3$/m$^2\cdot$s$\cdot$Pa, 25°C) is calculated from the following formula.

$$\text{Pure water permeation coefficient} = \text{pure water permeation amount} / (\text{membrane area} \times \text{water sampling time} \times \text{supply pressure})$$

The support layer used in the present invention can be manufactured according to a method described in "Office of Saline Water Research and Development Progress Report" No. 359 (1968).

(1-2) Separation functional layer

The separation functional layer has a thin membrane containing a polyamide which is obtained by a polycondensation reaction between a polyfunctional amine and a polyfunctional acid halide, as a main component. The term "main component" refers to a component that accounts for 50 wt% or more of the components of the separation functional layer.

The separation functional layer can be formed by interfacial polycondensation between a polyfunctional amine and a polyfunctional acid halide.

It is preferable that at least one of the polyfunctional amine and the polyfunctional acid halide contains a compound having three or more functional groups.

The polyfunctional amine refers to an amine having two or more amino groups, which are at least one of a primary amino group and a secondary amino group, in one molecule.

Examples of the polyfunctional amine include: aliphatic polyfunctional amines such as piperazine, 2,5-dimethylpiperazine, 2-methylpiperazine, 2,6-dimethylpiperazine, 2,3,5-trimethylpiperazine, 2,5-diethylpiperazine, 2,3,5-triethylpiperazine, 2-n-propylpiperazine, 2,5-di-n-butylpiperazine, and ethylenediamine; polyfunctional aromatic amines in which two amino groups are bonded to an aromatic ring in a positional relationship of any one of ortho position, meta position, or para position, such as o-phenylenediamine, m-phenylenediamine, p-phenylenediamine, o-xylylenediamine, m-xylylenediamine, p-xylylenediamine, o-diaminopyridine, m-diaminopyridine, and p-diaminopyridine; polyfunctional aromatic amines such as 1,3,5-triaminobenzene, 1,2,4-triaminobenzene, 3,5-diaminobenzoic acid, 3-aminobenzylamine, 4-aminobenzylamine; and the like.

Among them, in view of the selective separation property, the permeability and the heat durability of a membrane, piperazine, m-phenylenediamine, p-phenylenediamine, 1,3,5-triaminobenzene, and 2-methylpiperazine are preferably used. One kind of these polyfunctional amines may be used alone, or two or more kinds thereof may be used in combination.

The polyfunctional acid halide refers to an acid halide having at least two halogenated carbonyl groups in one molecule.

Examples of trifunctional acid halides include trimesic acid chloride, 1,3,5-cyclohexanetricarboxylic acid trichloride, 1,2,4-cyclobutanetricarboxylic acid trichloride, and the like. Examples of bifunctional acid halides include: aromatic bifunctional acid halides such as biphenyl dicarboxylic acid dichloride, azobenzene dicarboxylic acid dichloride, terephthalic acid chloride, isophthalic acid chloride, and naphthalene dicarboxylic acid chloride; aliphatic bifunctional acid halides such as adipoyl chloride and sebacoyl chloride; alicyclic bifunctional acid halides such as cyclopentane dicarboxylic acid dichloride, cyclohexanedicarboxylic acid dichloride, and tetrahydrofuran dicarboxylic acid dichloride; and the like.

In view of the reactivity with a polyfunctional amine, the polyfunctional acid halide is preferably a polyfunctional aromatic acid chloride. In addition, in view of the selective separation property and the heat durability of the membrane, the polyfunctional acid halide is preferably a polyfunctional aromatic acid chloride having two to four carbonyl chloride groups in one molecule. Among them, trimesic acid chloride, terephthalic acid chloride, and isophthalic acid chloride are more preferably used from the viewpoint of availability and handleability. One of these polyfunctional aromatic acid halides may be used alone, or two or more kinds thereof may be used in combination.

In addition, the thickness of the separation functional layer is usually within the range of 0.01 $\mu$m to 1 $\mu$m, preferably within the range of 0.1 $\mu$m to 0.5 $\mu$m in order to obtain sufficient separation performances and permeate flow rate.

2. Production method for composite semipermeable membrane

A production method for the composite semipermeable membrane will be described. The production method includes a process for forming a support layer and a process for forming a separation functional layer. The production method for the composite semipermeable membrane in the present invention is not limited to the production method described in the present description and the process for forming each layer.

(2-1) Process for forming support layer

The process for forming the support layer includes, for example:

(i) a step of preparing a resin solution containing rubber particles and a thermoplastic resin serving as a base material of a support layer;
(ii) a step of coating a substrate with the above resin solution; and
(iii) a step of coagulating the above thermoplastic resin by immersing the substrate coated with the resin solution in a coagulation bath.

In addition, the process for forming the support layer may further include a step of preparing rubber particles and the thermoplastic resin.

In the above step (i), the resin solution can be prepared by a method in which the rubber particles and the thermoplastic resin are melted and mixed to obtain a mixture and the mixture is further mixed with a solvent, or a method in which the rubber particles and the thermoplastic resin are directly added to a solvent and are dissolved in the solvent. The melting-and-mixing method is not particularly limited, and a melting-and-mixing method in which a single or twin screw is used in a cylinder with a heating device and a vent can be employed.

The weight ratio between the rubber particles and the thermoplastic resin (rubber particles: thermoplastic resin) in the resin solution is preferably 30 : 70 to 50 : 50. That is, the total amount of the rubber particles and the thermoplastic resin is 100 wt%, and the content of the rubber particles is preferably 30 wt% or more. When the content of the rubber particles is within this range, there are 6 or more rubber particles present in the area X, and excellent water permeability is obtained. In addition, when the content of the thermoplastic resin is 50 wt% or more relative to the total amount of the rubber particles and the thermoplastic resin, the thermoplastic resin forms a continuous structure. Thus, the occurrence of defects is prevented.

The concentration of the thermoplastic resin in the resin solution is preferably 9 wt% or more and 18 wt% or less, and more preferably 11 wt% or more and 16 wt% or less. When the concentration of the thermoplastic resin is 9 wt% or more and 18 wt% or less, a support membrane with the strength that can withstand practical use is obtained.

The solvent may be any solvent as far as it is a good solvent of the thermoplastic resin. The good solvent of the thermoplastic resin dissolves the thermoplastic resin. Examples of the good solvent include tetrahydrofuran (THF), amides such as tetramethylurea, dimethylacetamide (DMAC), and dimethylformamide (DMF), trimethyl phosphate, dimethyl imidazolidinone (DMI), and a mixed solvent thereof.

An ethylene-carbon monoxide-(meth)acrylic acid ester copolymer is preferably added to the resin solution. The blending amount of the ethylene-carbon monoxide-(meth)acrylic acid ester copolymer is preferably 1.0 to 10.0 parts by weight, more preferably 3.0 to 8.0 parts by weight relative to 100 parts by weight of the thermoplastic resin. When the blending amount thereof relative to 100 parts by weight of the thermoplastic resin is 1.0 parts by weight or more, an effect of increasing the number of rubber particles can be obtained, and when the blending amount is 10.0 parts by weight or less, the moldability of the support layer can be maintained.

In addition, the resin solution may contain an additive for adjusting the pore diameter, porosity, hydrophilicity, elastic modulus, or the like of the support layer. Examples of the additive for adjusting the pore diameter and the porosity include water, alcohols, water-soluble polymers or salts thereof, such as polyethylene glycol, polyvinylpyrrolidone, polyvinyl alcohol, and polyacrylic acid, inorganic salts such as lithium chloride, sodium chloride, calcium chloride, and lithium nitrate, formamide, and the like, but the additive is not limited to these examples. Examples of the additive for adjusting the hydrophilicity and the elastic modulus include various surfactants.

In the step (ii) of coating the substrate with the resin solution, for example, a spin coater, a flow coater, a roll coater, spray, a comma coater, a bar coater, a gravure coater, a slit die coater, and the like can be employed.

The resin solution is impregnated into the substrate during the period from the coating to the coagulation. The impregnation amount of the resin solution into the substrate can be adjusted depending on the time period after coating the substrate with the resin solution and before immersing the substrate with the resin solution in a coagulation bath, the viscosity of the resin solution, or a combination of these conditions.

The time period after coating the substrate with the resin solution and before immersing the substrate with the resin solution in a coagulation bath is preferably within a range of 0.1 second to 5 seconds. When the time period after coating the substrate with the resin solution and before immersing the substrate with the resin solution in a coagulation bath is within this range, the resin solution is coagulated after being sufficiently impregnated between fibers of the substrate. The preferred range of the time period after coating the substrate with the resin solution and before immersing the substrate with the resin solution in a coagulation bath may be appropriately adjusted depending on the viscosity of the resin solution used, or the like.

The temperature of the resin solution during application thereof is preferably within a range of 5°C to 60°C, more preferably within a range of 10°C to 35°C. When the temperature of the solution is within this range, the organic-solvent solution of the thermoplastic resin containing the rubber particles is likely to be coagulated after being sufficiently impregnated between fibers of the substrate without precipitation of the resin solution. As a result, a support membrane in which the support layer is firmly bonded to the substrate by an anchor effect can be obtained.

In the step (iii), the coagulation bath may include any as far as it contains a non-solvent. As the non-solvent, a solvent, which has a low solubility as compared with the good solvent used for the preparation of the solution of the thermoplastic resin, is employed. Examples of the non-solvent include water, aliphatic hydrocarbons such as hexane, pentane, and trichlorethylene, aromatic hydrocarbons such as benzene and toluene, aliphatic alcohols such as methanol, ethanol, ethylene glycol, diethylene glycol, triethylene glycol, propylene glycol, butylene glycol, pentanediol, hexanediol, and polyethylene glycol with a low molecular weight, or a mixed solvent thereof. Water is generally used.

The temperature of the coagulation bath is preferably -20°C to 50°C. The temperature is more preferably 0°C to 40°C. When the temperature is higher than 50°C, the vibration of the coagulation bath surface becomes strong due to a thermal motion, and the smoothness of a membrane surface after the membrane formation tends to decrease. When the temperature is lower than -20°C, a coagulation rate may become slow, and the membrane formability may deteriorate.

Next, the support membrane obtained above is washed with pure water to remove the solvent remaining in the support membrane. The temperature of the pure water at this time is preferably 25°C to 80°C.

As described above, the process for forming the support layer may further include the step of preparing the rubber particles and the thermoplastic resin. A production method for rubber particles containing a graft copolymer is exemplified as a production method for rubber particles below.

In the production of the rubber particles, any polymerization method such as emulsion polymerization, suspension polymerization, bulk polymerization, and solution polymerization may be employed, or two or more kinds of methods may be used in combination. In particular, the emulsion polymerization method or the bulk polymerization method is preferred, and the emulsion polymerization method is more preferred from the viewpoint of being able to prevent deterioration of the rubber components due to the excessive heat history. In addition, all the monomers may be introduced into a polymerization site at the start of polymerization, or a part or all of the monomers may be continuously or partially introduced while the polymerization is being performed. Examples of monomers to be used are as described above.

When the graft copolymer-containing rubber particles are produced according to the emulsion polymerization method, the monomer mixture can be subjected to emulsion graft polymerization in the presence of rubber-containing latex. The emulsifier used in the emulsion polymerization method is not particularly limited, and various surfactants can be used. As the surfactant, anionic surfactants such as carboxylate type surfactants, sulfate type surfactants, and sulfonate type surfactants can be preferably used. Two or more kinds of these surfactants may be used.

Specific examples of the anionic surfactant include caprylate, caprate, laurate, myristic acid salt, palmitate, stearate, oleate, linoleate, linolenate, rosin acid salt, behenate, castor oil sulfate ester salts, lauryl alcohol sulfate ester salts, other higher alcohol sulfate ester salts, dodecylbenzene sulfonate, alkylnaphthalene sulfonate, alkyl diphenyl ether disulfonate, naphthalene sulfonate condensate, dialkyl sulfosuccinate, polyoxyethylene lauryl sulfate, polyoxyethylene alkyl ether sulfate, polyoxyethylene alkyl phenyl ether sulfate, and the like. Examples of the salts herein include an alkali metal salt such as an ammonium salt, a potassium salt, a sodium salt, and a lithium salt. Among them, potassium salts or sodium salts of palmitic acid, stearic acid and oleic acid are preferably used.

An initiator used for polymerization is not particularly limited, and a peroxide, an azo-based compound, a persulfate, or the like is used.

Specific examples of the peroxide include benzoyl peroxide, cumene hydroperoxide, dicumyl peroxide, diisopropylbenzene hydroperoxide, t-butyl hydroperoxide, t-butyl peroxyacetate, t-butyl peroxybenzoate, t-butyl isopropyl carbonate, di-t-butyl peroxide, t-butyl peroctate, 1,1-bis(t-butylperoxy) 3,3,5-trimethylcyclohexane, 1,1-bis(t-butylperoxy) cyclohexane, t-butylperoxy-2-ethylhexanoate, and the like.

Specific examples of the azo-based compound include azobisisobutyronitrile, azobis(2,4-dimethylvaleronitrile), 2-phenylazo-2,4-dimethyl-4-methoxyvaleronitrile, 2-cyano-2-propylazoformamide, 1,1'-azobiscyclohexane-1-carbonitrile, azobis(4-methoxy-2,4-dimethylvaleronitrile), dimethyl 2,2'-azobisisobutyrate, 1-t-butylazo-2-cyanobutane, 2-t-butylazo-2-cyano-4-methoxy-4-methylpentane, and the like.

Specific examples of the persulfate include potassium persulfate, sodium persulfate, ammonium persulfate, and the like.

Two or more kinds of these initiators may be used. In the emulsion polymerization method, potassium persulfate, cumene hydroperoxide, or the like is preferably used. In addition, the initiator can also be used in redox systems.

A chain transfer agent can also be used for the purpose of adjusting the degree of polymerization and grafting ratio of the graft site in the graft copolymer-containing rubber particles. Specific examples of the chain transfer agent include mercaptans such as n-octyl mercaptan, t-dodecyl mercaptan, n-dodecyl mercaptan, n-tetradecyl mercaptan, and n-octadecyl mercaptan, terpenes such as terpinolene, and the like. Two or more kinds of these chain transfer agents may be used. Among these chain transfer agents, n-octyl mercaptan and t-dodecyl mercaptan are preferably used.

A coagulant is added to the graft copolymer latex produced by the emulsion polymerization method to coagulate the latex component and the graft copolymer-containing rubber particles can be collected. As the coagulant, an acid or a water-soluble salt is used. Specific examples of the coagulant include acids such as sulfuric acid, hydrochloric acid, phosphoric acid, and acetic acid, water-soluble salts such as calcium chloride, magnesium chloride, barium chloride, aluminum chloride, magnesium sulfate, aluminum sulfate, aluminum ammonium sulfate, aluminum potassium sulfate, and aluminum sodium sulfate, and the like. Two or more kinds of these coagulants may be used.

When the latex component is coagulated with an acid, a method for collecting the graft copolymer-containing rubber particles after the acid is neutralized with an alkali can be employed. From the viewpoint of handleability, a graft copolymer-containing rubber particle slurry obtained by coagulating the latex component is preferably formed in the form of a powder through dehydration/washing/re-dehydration/drying steps.

Hereinafter, a production method for a vinyl-based polymer used as the base material of the support layer will be described. For the production of the vinyl-based copolymer, any polymerization method such as emulsion polymerization, suspension polymerization, bulk polymerization, and solution polymerization may be employed, or two or more kinds of methods may be used in combination. In particular, the suspension polymerization method or the bulk polymerization method is preferred, and the suspension polymerization method is the most preferred in view of ease of polymerization control and ease of post-treatment. In addition, all the monomers may be introduced into a polymerization site at the start of polymerization, or a part or all of the monomers may be continuously or partially introduced while the polymerization is being performed. Examples of monomers to be used are as described above.

Examples of a suspension stabilizer used for the suspension polymerization include inorganic suspension stabilizers such as clay, barium sulfate, and magnesium hydroxide, organic suspension stabilizers such as polyvinyl alcohol, carboxymethyl cellulose, polyacrylamide, and a methyl methacrylate/acrylamide copolymer, and the like. Two or more kinds of these suspension stabilizers may be used. Among these suspension stabilizers, the organic suspension stabilizers are preferred, and the methyl methacrylate/acrylamide copolymer is preferred in view of heat coloring stability during melting.

As an initiator and a chain transfer agent used for the suspension polymerization of the vinyl-based copolymer, the examples of the initiator and the chain transfer agent of the above graft copolymer-containing rubber particles can be included.

When the vinyl-based copolymer is produced by the suspension polymerization, the polymerization temperature is not particularly limited, and it is preferable that polymerization is started at 60°C to 80°C, and the temperature is raised at a time point at which the polymerization rate is 50% to 70%, and reaches 100°C to 120°C finally, from the viewpoint of easily adjusting a weight average molecular weight of a vinyl-based copolymer to the aforementioned range and from the viewpoint of suspension stability.

The weight average molecular weight of the vinyl-based copolymer can be easily adjusted by using the aforementioned initiator and chain transfer agent, or by setting the polymerization temperature within the aforementioned preferred range.

(2-2) Process for forming separation functional layer

Next, the process for forming a separation functional layer constituting a composite semipermeable membrane will be described. The separation functional layer is a layer that contains a polyamide as a main component.

In the process for forming the separation functional layer, a polyamide skeleton can be formed by performing interfacial polycondensation at a surface of the support membrane by using an aqueous solution containing the aforementioned polyfunctional amine, and an organic-solvent solution that is immiscible with water and contains a polyfunctional acid halide.

The concentration of the polyfunctional amine in the aqueous solution containing the polyfunctional amine is preferably within the range of 0.1 wt% or more and 15 wt% or less, and more preferably within the range of 0.5 wt% or more and 10 wt% or less. When the concentration of the polyfunctional amine is within the range, sufficient water permeability and sufficient solute-removing ability can be obtained.

Additives such as surfactants, alkaline compounds, acylation catalysts, and antioxidants can be added to the aqueous solution containing the polyfunctional amine as long as the additives do not interfere with the reaction between the polyfunctional amine and the polyfunctional acid halide.

Examples of the surfactants include sodium dodecylbenzene sulfonate, sodium dodecyl sulfate, sodium lauryl sulfate, and the like.

Examples of the alkaline compounds include sodium hydroxide, trisodium phosphate, triethylamine, and the like.

To perform the interfacial polycondensation on the support membrane, first, the above aqueous solution containing the polyfunctional amine is brought into contact with the support membrane. The contact is preferably performed on the surface of the support membrane uniformly and continuously.

Specific examples include a method in which the aqueous solution containing the polyfunctional amine is coated on the support membrane and a method in which the support membrane is immersed in the aqueous solution containing the polyfunctional amine.

The time of the contact between the support membrane and the aqueous solution containing the polyfunctional amine is preferably within the range of 1 second or more and 10 minutes or less, and more preferably in the range of 5 seconds or more and 3 minutes or less.

After the aqueous solution containing the polyfunctional amine is brought into contact with the support membrane, the excess solution is sufficiently drained not to allow droplets to remain on the membrane. When the excess solution is sufficiently drained, it is possible to prevent a decrease in the removal performance of the composite semipermeable membrane due to a defect caused by the remaining portion of the droplets after formation of the composite semipermeable membrane.

Examples of a method for the excess-solution draining include: a method in which the support membrane which has contacted the aqueous solution containing the polyfunctional amine is held vertically to allow the excess aqueous solution to flow down naturally; a method in which an airflow such as nitrogen is blown from an air nozzle against the surface of the microporous support layer to forcedly drain the excess solution; and the like. In addition, after the excess-solution draining, the membrane surface may be dried to remove some of the water contained in the aqueous solution.

Next, an organic-solvent solution, which is immiscible with water and contains a polyfunctional acid halide, is brought into contact with the support membrane which has already contacted the aqueous solution containing the polyfunctional amine, and a crosslinked polyamide separation functional layer is formed through the interfacial polycondensation.

The concentration of the polyfunctional acid halide in the organic-solvent solution immiscible with water is preferably within a range of 0.01 wt% or more and 3 wt% or less, and more preferably within a range of 0.05 wt% or more and 2 wt% or less. When the concentration of the polyfunctional acid halide is 0.01 wt% or more, a sufficient reaction rate is obtained, and when the concentration thereof is 3 wt% or less, the occurrence of a side reaction can be sufficiently prevented.

The organic solvent immiscible with water is desirably a solvent which dissolves the polyfunctional acid halide and does not damage the support membrane. Any such organic solvent which is inert to the polyfunctional amine compound and the polyfunctional acid halide may be used. Examples of the organic solvent include hydrocarbon-based solvents, and the organic solvent may be a single substance, or may be a mixture. Examples of the organic solvent include: saturated hydrocarbons such as hexane, heptane, octane, nonan, and decane; isoparaffin-based solvents such as IP Solvent 1620, IP clean LX, IP Solvent 2028, ISOPAR E, ISOPAR G, ISOPAR H, and ISOPAR L, which are manufactured by EXXON MOBIL CORPORATION; and naphthenic solvent such as Exol D30, Exol D40, Exol D60, and Exol D80, which are manufactured by EXXON MOBIL CORPORATION.

The organic-solvent solution may contain other monomers reactive with polyfunctional amines, organic solvents, acylation catalysts, surfactants, solubilizers, complexing agents, and the like. Examples of other monomers reactive with polyfunctional amines include a compound containing at least one, preferably two to four functional groups reactive with amines, which is selected from sulfonyl halides and acid anhydrides, and a compound containing at least one carboxy group and at least one acyl halide. Examples of the organic solvent include benzene, toluene, acetone, ethyl acetate, and the like. Examples of the acylation catalyst include DMF and the like.

A method for bringing the organic-solvent solution containing the polyfunctional acid halide into contact with the support membrane may be performed in the same manner as the method for coating the aqueous solution containing the polyfunctional amine on the support membrane.

In the process for forming the separation functional layer in the present invention, it is important to cover the support membrane with a thin membrane of crosslinked polyamides, and to allow the water-immiscible organic-solvent solution, which contains the polyfunctional acid halide and is in contact with the support membrane, to remain on the support membrane. Therefore, the time for carrying out the interfacial polycondensation is preferably 0.1 second or more and 3 minutes or less, and more preferably 0.1 second or more and 1 minute or less. When the time for carrying out the interfacial polycondensation is 0.1 second or more and 3 minutes or less, the support membrane can be sufficiently covered with the thin membrane of crosslinked polyamides, and the organic-solvent solution containing the polyfunctional acid halide can be held on the support membrane.

After the polyamide separation functional layer is formed on the support membrane by the interfacial polycondensation, the excess solvent is drained. Examples of methods for draining of the organic solvent include a method in which the membrane is held vertically to allow the excess organic solvent to flow down naturally so as to be removed, a method for drying and removing the organic solvent by blowing air with a blower, a method for removing the excess organic solvent by a mixed fluid (two fluids) of water and air, and the like.

Further, it is preferable to add a step of washing the support membrane with pure water at 25°C or higher and 80°C or lower for 1 minute or more.

3. Utilization of composite semipermeable membrane

The composite semipermeable membrane of the present invention is preferably used as a spiral composite semipermeable membrane element. Further, the element may be connected in series or in parallel to form a composite semipermeable membrane module housed in a pressure vessel.

The above composite semipermeable membrane, or the element or the module thereof is combined with a pump for supplying raw water to the composite semipermeable membrane, the element or the module thereof, and a device for pre-treating the raw water to constitute a fluid separation device. With the separation device, the raw water is separated into permeated water intended for drinking water or the like, and concentrated water which does not permeate the membrane, to obtain water of interest.

When the operating pressure of the fluid separation device is high, salt removal ratio is improved, though the energy required for operation also increases. Considering the durability of the composite semipermeable membrane of the present invention, the operating pressure when water to be treated permeates the composite semipermeable membrane is preferably 0.2 MPa or more and 2 MPa or less.

When the temperature is raised, the salt removal ratio decreases, and as the salt removal ratio decreases, a membrane permeation flux also decreases. Thus, the temperature of the feed water is preferably 5°C or higher and 35°C or lower.

In addition, when feed water has a high salt concentration such as seawater, increase in pH of the feed water would cause generation of scale such as magnesium, and deterioration of the membrane due to the high pH operation is concerned. Thus, operation in a neutral range is preferred.

Examples of the raw water to be treated by the composite semipermeable membrane include liquid mixtures containing total dissolved solids (TDS) having a density of 500 mg/L to 100 g/L, such as seawater, brine, and wastewater. In general, TDS refers to a content of total dissolved solids and is represented by "weight / volume" or represented by "weight ratio" considering 1 L as 1 kg. According to the definition, the TDS can be calculated from a weight of residues obtained by evaporating the solution, filtered by a 0.45-$\mu$m filter, at a temperature of 39.5°C or higher and 40.5°C or lower, however, more conveniently, is converted from practical salinity.

Examples

Hereinafter, the present invention will be described in more detail by way of Examples, but the present invention is not limited to these Examples.

<1. Measurement of grafting ratio of graft copolymer-containing rubber particles>

First, 100 mL of acetone was added to a predetermined amount (m; about 1 g) of the graft copolymer-containing rubber particles, which were dried under vacuum at 80°C for 4 hours, and the mixture was refluxed for 3 hours in a water bath of 70°C. This solution was centrifuged by a centrifugal separator (KUBOTA 6900) at 8,800 r.p.m (12, 300G) and 5°C for 40 minutes, and then the supernatant was removed. Subsequently, the vessel containing the substance precipitated at the bottom of the vessel was dried under vacuum at 40°C for 8 hours. Finally, the weight of vessel was measured and the tare weight was subtracted from the weight of vessel, to measure the weight (n) of the precipitate. The grafting ratio is calculated by the following formula. Here, L is the rubber content (wt%) of the graft copolymer-containing rubber particles.

$$\text{Grafting ratio [\%]} = \{[(n) - ((m) \times L/100)]/[(m) \times L/100]\} \times 100$$

<2. Weight average particle size of rubber particles>

The rubber particles were dispersed in an aqueous medium, and the particle size distribution was measured by a laser diffraction particle sizing analyzer (LS 13 320 manufactured by BECKMAN COULTER CORPORATION). The weight average particle size of the rubber particles was calculated from this particle size distribution.

<3. Measurement of thickness of support membrane>

A support membrane, which was washed with pure water of 70°C for 5 minutes, was air-dried at 25°C. Thicknesses of any 20 locations of the dried sample were measured by a digital thickness gauge (SMD-565J-L manufactured by TECLOCK CORPORATION), and the arithmetic mean thereof was calculated and regarded as the thickness of the support membrane.

<4. Measurement of thickness of support layer>

A support membrane, which was washed with pure water of 70°C for 5 minutes, was cut by a freeze fracture method to obtain five sections. Each section sample was thinly coated with platinum, and then a cross-sectional photograph of each section sample was captured at a magnification of 100 to 500 times at acceleration voltage of 5 kV by a high resolution field emission scanning electron microscope (S-5500 scanning electron microscope manufactured by HITACHI HIGH-TECHNOLOGIES CORPORATION). In each image captured, thicknesses of the support layer at any 10 points were measured in a direction (plane direction of the membrane) perpendicular to the thickness direction on the scale. An arithmetic mean was calculated from 50 values obtained for one support membrane and was regarded as the thickness of the support layer.

<5. Measurement of amount of insoluble components contained in support layer>

A support membrane (area: 0.1 m$^2$), which was washed with pure water of 70°C for 1 hour or more, was air-dried at 25°C and was immersed in 200 mL of acetone of 25°C for 20 hours, so that the support layer part was dissolved to obtain a solution (using a 250 ml vessel with a previously measured tare weight during the immersion). Next, the obtained solution was filtered through a metal mesh (wire diameter: 0.03 mm, mesh: 300, and manufactured by KANSAI WIRE NETTING CO., LTD.) to remove the substrate. Subsequently, the obtained liquid was centrifuged by a centrifugal separator (KUBOTA 6900) at 8,800 r.p.m (12, 300G) and 5°C for 40 minutes, and then the supernatant was removed. Further, the vessel containing the substance precipitated at the bottom of the vessel was dried under vacuum at 40°C for 8 hours. Finally, the weight of vessel was measured and the tare weight was subtracted from the weight of the vessel to calculate the weight of the precipitate, and the amount of the insoluble components was calculated from the following formula.

$$\text{Amount of insoluble components [mg/m}^2 \cdot \mu\text{m]} = (\text{weight of precipitate [mg] / area of support membrane [m}^2]) / \text{thickness of support layer [}\mu\text{m]}$$

<6. Measurement of pure water permeation coefficient of support membrane>

First, a produced support membrane was washed with pure water of 70°C for 5 minutes. Next, a sample was cut into a circle having a diameter of 4.3 cm, and the cut sample was set in a stirring ultra holder (UHP-43K manufactured by ADVANTECH TOYO CO., LTD.) (effective filtration area: 10.9 cm$^2$). Subsequently, pure water of 25°C was put in a cell, a cap was mounted, and then the pressure was raised to 100 kPa with nitrogen. Finally, the pure water permeation amount in the constant time was measured, and the pure water permeation coefficient ($\times$ 10$^{-9}$ m$^3$/m$^2$·s·Pa, 25°C) was calculated from the following formula.

$$\text{Pure water permeation coefficient} = \text{pure water permeation amount / (membrane area} \times \text{water sampling time} \times \text{supply pressure)}$$

<7. Measurement of number of rubber particles contained in support layer>

A support membrane, which was washed with pure water of 70°C for 5 minutes, was cut by a freeze fracture method to obtain 10 sections. Each section sample was stained with osmium tetroxide, and then a cross-sectional photograph of each section sample was captured at a magnification of 10,000 times at acceleration voltage of 5 kV by a high resolution field emission scanning electron microscope (S-5500 scanning electron microscope manufactured by HITACHI HIGH-TECHNOLOGIES CORPORATION). Regarding 20 images obtained by observing one section sample at two view fields, the number of particles with a Krumbein diameter of 50 nm or more within an area of 3 $\mu$m in the thickness direction from the surface of the support layer and 3 $\mu$m in a direction along the above surface was counted, . An arithmetic mean (rounded down) was calculated from the obtained 20 pieces of data and was regarded as the number of rubber particles contained in the support layer. The number of the rubber particles can also be determined from the cross-sectional photograph of the composite semipermeable membrane.

<8. Measurement of weight average molecular weight Mw of thermoplastic resin in support layer>

A support membrane or a composite semipermeable membrane (area: 0.1 m$^2$), which was washed with pure water of 70°C for 1 hour or more, was air-dried and was immersed in THF (200 mL) of 25°C for 4 hours, so that the support layer part was dissolved, and the thermoplastic resin solution was obtained (using a 250 mL of vessel during the immersion). Next, the obtained solution was filtered through a metal mesh (wire diameter: 0.03 mm, mesh: 300, and manufactured by KANSAI WIRE NETTING CO., LTD.) to remove the substrate and the functional layer. Subsequently, the obtained liquid was centrifuged by a centrifugal separator (KUBOTA 6900) at 8,800 r.p.m (12, 300G) and 5°C for 40 minutes, and then the supernatant was separated and collected. The obtained supernatant was measured using GPC under the following conditions to calculate a weight average molecular weight (Mw). As for a calibration curve, polystyrene was used.

Solvent: tetrahydrofuran

Device: 2695 separation module manufactured by Waters Corporation
Column: TSKgel Super II ZM-M, super II ZM-N, and Super HZ-L manufactured by Tosoh Corporation (a total of three)
Temperature of column: 40°C
Flow rate of solvent: 0.35 mL/min
Detector: 2414 differential refractive index detector manufactured by Waters Corporation

<9. Evaluation of membrane performances>

The performances of a composite semipermeable membrane were evaluated according to a method shown below.

(Salt removal property)

Feed water (concentration of NaCl: 500 ppm), which was adjusted to have a temperature of 25°C and a pH of 7, was supplied to a composite semipermeable membrane at operating pressure of 0.5 MPa, the membrane filtration treatment was performed for 3 hours, and the electrical conductivity of the feed water and permeate water after the membrane filtration treatment was measured by a multi water quality meter (MM60R) manufactured by DKK-TOA CORPORATION. Next, a calibration curve created in advance was used, and the conductivity was converted to calculate the concentration of NaCl. The salt removal property, that is, a NaCl removal ratio was calculated, from the concentration of NaCl, based on the following formula.

$$\text{NaCl removal ratio (\%)} = 100 \times \{1 - (\text{NaCl concentration in permeated water/NaCl concentration in feed water})\}$$

(Membrane permeation flux (Flux))

In the above test of the salt removal property, the permeate flow rate was also measured and was converted into the permeation amount (cubic meter) per square meter of membrane surface per day, which was represented as the membrane permeation flux (m$^3$/m$^2$/day).
Materials used for Examples and Comparative Examples are shown below.

(Production Example 1) Graft copolymer-containing rubber particles (A)

To a reactor in which the atmosphere was replaced with nitrogen, 150 parts by weight of pure water, 0.5 parts by weight of glucose, 0.5 parts by weight of sodium pyrophosphate, 0.005 parts by weight of ferrous sulfate, and 60 parts by weight of polybutadiene latex (weight average particle size: 350 nm) (solid matter conversion) were added, and the temperature in the reactor was raised to 65°C while stirring the mixture.
When the internal temperature reached 65°C, the point in time was set as a start point of polymerization, and 28 parts by weight of styrene, 12 parts by weight of acrylonitrile, and 0.2 part by weight of t-dodecyl mercaptan were continuously added over 4 hours. At the same time, an aqueous solution composed of 0.2 part by weight of cumene hydroperoxide and potassium oleate were added continuously over 7 hours to complete the reaction.
Then, the resulting product was added to a 0.3 wt% dilute sulfuric acid aqueous solution having a temperature of 90°C and was allowed to agglomerate, an aqueous solution of sodium hydroxide was added to perform neutralization, and powdery graft copolymer-containing rubber particles A were obtained through a washing and filtration step, a dehydration step, and a drying step.

The grafting ratio of the graft copolymer-containing rubber particles A was 41%. In acetone-soluble components of the graft copolymer-containing rubber particles A, the ratio of the component derived from styrene to the component derived from acrylonitrile (styrene: acrylonitrile) was 72 : 28 based on total 100 wt% of both components.

(Production Example 2) Suspension polymerization medium (methyl methacrylate/acrylamide copolymer)

20 parts by weight of methyl methacrylate, 80 parts by weight of acrylamide, 0.3 part by weight of potassium persulfate, and 1,800 parts by weight of ion exchanged water were added to a reactor, and the gas phase in the reactor was replaced with nitrogen gas. The temperature in the reactor was maintained at 70°C while stirring the mixture well, and the polymerization was terminated at a point in time when the polymerization rate reached 99%, and an aqueous solution of a copolymer of methyl methacrylate and acrylamide was obtained.

To this aqueous solution, 35 parts by weight of sodium hydroxide and 15,000 parts by weight of ion exchanged water were added, and a 0.6 wt% aqueous solution of a copolymer of methyl methacrylate and acrylamide was obtained. The resulting 0.6 wt% aqueous solution was stirred at 70°C for 2 hours for saponification, then cooled down to a room temperature, and an aqueous solution of a medium for the suspension polymerization.

(Production Example 3) Vinyl-based copolymer (B-1)

To a 20 L stainless steel autoclave, 6 parts by weight of the aqueous solution of the copolymer of methyl methacrylate/acrylamide produced in Production Example 2, and 150 parts by weight of pure water were added, and was stirred at 400 rpm, and the atmosphere in the system was replaced with nitrogen gas. Next, a mixed solution of 72 parts by weight of styrene and 28 parts by weight of acrylonitrile (a total of 100 parts by weight), 0.40 parts by weight of t-dodecyl mercaptan, and 0.4 parts by weight of 2,2'-azobisisobutyronitrile was added into the system under stirring, followed by raising the temperature to 60°C, and polymerization started. After the start of the polymerization, the reaction temperature was raised to 65°C over 30 minutes, and then the reaction temperature was raised to a temperature of 100°C over 3 hours. Then, the system was cooled down to a room temperature, and a vinyl-based copolymer B-1 was obtained through separation, washing and drying of polymers. The weight average molecular weight Mw of this vinyl-based copolymer B-1 was 100,000.

(Production Example 4) Vinyl-based copolymer (B-2)

A vinyl-based copolymer B-2 was obtained in the same manner as Production Example 3 except that the addition amount of t-dodecyl mercaptan was changed to 0.30 parts by weight. The weight average molecular weight Mw of this vinyl-based copolymer B-2 was 140,000.

Ethylene-carbon monoxide-(meth)acrylic acid ester copolymer

"Elvalloy" HP-4051 manufactured by DOW-MITSUI POLYCHEMICALS CO., LTD. was used.

<Example 1>

The graft copolymer-containing rubber particles A obtained in Production Example 1 and the vinyl-based copolymer B-1 obtained in Production Example 3 were added to DMF at proportions shown in Table 1 to reach 16 wt%, and were heated and held at 90°C for 3 hours while being stirred, and a resin solution was thus prepared.

The prepared resin solution was cooled down to 25°C and was filtered by using a metal mesh (wire diameter: 0.03 mm, mesh: 400, and manufactured by KANSAI WIRE NETTING CO., LTD.). Then, the resin solution was coated, with a thickness of 100 μm, onto a nonwoven fabric (thickness: about 90 μm, air permeability: 1.0 cc/cm$^2$/sec) made of polyester fibers produced by a papermaking method. After the coating, the nonwoven fabric was immediately immersed in pure water and phase-separated, and was subsequently washed with pure water of 70°C for 5 minutes, and a support membrane was thus obtained.

The obtained support membrane was immersed in a 2.0 wt% aqueous solution of m-phenylenediamine (m-PDA), which was prepared with pure water, for 10 seconds, and then was pulled up slowly such that the membrane surface became vertical. Nitrogen was blown from an air nozzle to remove excess aqueous solution from the surface of the support membrane, followed by placing the support membrane such that the membrane surface became horizontal, and an n-decane solution of 25°C containing trimesic acid chloride in 0.07 wt% was coated onto the support membrane such that the membrane surface was completely wet.

The support membrane was allowed to stand for 30 seconds, then the membrane surface was held vertically for 1 minute and the solution was drained to remove the excess solution from the membrane, and air of 25°C was blown against the membrane surface by a blower to dry the support membrane. Then, the support membrane was washed with pure water of 70°C for 5 minutes, and a composite semipermeable membrane was thus obtained. The membrane performances of the obtained composite semipermeable membrane are shown in Table 1.

<Examples 2 and 3, Comparative Examples 1 and 2>

Composite semipermeable membranes of Examples 2 and 3, and Comparative Examples 1 and 2 were respectively obtained in the same manner as Example 1 except that the proportion of the graft copolymer-containing rubber particles A, the proportion of the vinyl-based copolymer B-1, and the concentration of the resin were changed to values shown in Table 1. The membrane performances of the obtained composite semipermeable membrane are shown in Table 1.

<Comparative Example 3>

A mixture of an ABS resin (TOYOLAC (registered trademark) 100) as a thermoplastic resin, and DMF was heated and held at 100°C for 2 hours while being stirred, thereby preparing a resin solution. The concentration of the ABS resin in the resin solution was 20 wt%.

The prepared resin solution was cooled down to a room temperature and was filtered by using a metal mesh (wire diameter: 0.03 mm, mesh: 400, and manufactured by KANSAI WIRE NETTING CO., LTD.). Then, the resin solution was coated, with a thickness of 120 $\mu$m, onto a nonwoven fabric (thickness: about 90 $\mu$m, air permeability: 1.0 cc/cm$^2$/sec) made of polyester fibers produced by a papermaking method. After the coating, the nonwoven fabric was immediately immersed in pure water and phase-separated, and was subsequently washed with pure water of 70°C for 5 minutes, and a support membrane was thus obtained.

The obtained support membrane was immersed in a 2.0 wt% aqueous solution of m-phenylenediamine (m-PDA), which was prepared with pure water, for 10 seconds, and then was pulled up slowly such that the membrane surface became vertical. Nitrogen was blown from an air nozzle to remove excess aqueous solution from the surface of the support membrane, followed by placing the support membrane such that the membrane surface became horizontal, and an n-decane solution of 25°C containing trimesic acid chloride in 0.07 wt% was coated onto the support membrane such that the membrane surface was completely wet.

The support membrane was allowed to stand for 30 seconds, then the membrane surface was held vertically for 1 minute and the solution was drained to remove the excess solution from the membrane, and air of 25°C was blown against the membrane surface by a blower to dry the support membrane. Then, the support membrane was washed with pure water of 70°C for 5 minutes, and a composite semipermeable membrane was thus obtained. The membrane performances of the obtained composite semipermeable membrane are shown in Table 1.

<Comparative Example 4>

A composite semipermeable membrane of Comparative Example 4 was obtained in the same manner as Comparative Example 3 except that the concentration of the ABS resin in the resin solution was changed to 16 wt%. The membrane performances of the obtained composite semipermeable membrane are shown in Table 1.

[Table 1]

| | | Unit | Comparative Example 1 | Example 1 | Example 2 | Example 3 | Comparative Example 2 | Comparative Example 3 | Comparative Example 4 |
|---|---|---|---|---|---|---|---|---|---|
| Resin Lot. | | - | C-1 | C-2 | C-3 | C-4 | C-5 | 100-322 | 100-322 |
| Mixing proportion | A | wt% | 25 | 30 | 40 | 50 | 55 | - | - |
| | B-1 | wt% | 75 | 70 | 60 | 50 | 45 | - | - |
| Concentration of solution | | wt% | 16 | 16 | 16 | 18 | 20 | 20 | 16 |
| Concentration of resin | | wt% | 12.0 | 11.2 | 9.6 | 9.0 | 9.0 | - | - |
| Mw | | $\times 10^4$ | 10 | 10 | 10 | 10 | 10 | 12 | 12 |
| Amount of insoluble components | | $mg/m^2 \cdot \mu m$ | 56 | 61 | 77 | 91 | 87 | 59 | 55 |
| Number of particles | | | 3 | 6 | 9 | 12 | 14 | 5 | 4 |
| Thickness of support membrane | | $\mu m$ | 142 | 143 | 141 | 140 | 144 | 144 | 143 |
| Thickness of support layer | | $\mu m$ | 51 | 53 | 50 | 48 | 52 | 53 | 53 |
| Pure water permeation coefficient | | $\times 10^{-9}$ $m^3/m^2 \cdot s \cdot Pa$, 25°C | 0.7 | 1.7 | 2.9 | 4.1 | 5.8 | 0.1 | 1.0 |
| Flux | | $m^3/m^2 \cdot d$ | 0.15 | 0.21 | 0.23 | 0.28 | 0.37 | 0.09 | 0.16 |
| Salt removal property | | % | 90.2 | 93.4 | 93.7 | 93.6 | 84.4 | 93.1 | 93.0 |

<Example 4>

A composite semipermeable membrane was obtained in the same manner as Example 1 except that the vinyl-based copolymer B-2 was used instead of the vinyl-based copolymer B-1. The membrane performances of the obtained composite semipermeable membrane are shown in Table 2.

[Table 2]

| | | Unit | Comparative Example 1 | Example 1 | Example 4 |
|---|---|---|---|---|---|
| Resin Lot. | | - | C-1 | C-2 | C-6 |
| Mixing proportion | A | wt% | 25 | 30 | 25 |
| | B-1 | wt% | 75 | 70 | 0 |
| | B-2 | wt% | 0 | 0 | 75 |
| | B-3 | wt% | 0 | 0 | 0 |
| Concentration of solution | | wt% | 16 | 16 | 16 |
| Concentration of resin | | wt% | 12.0 | 11.2 | 12.0 |
| Mw | | $\times 10^4$ | 10 | 10 | 14 |
| Amount of insoluble components | | mg/m$^2$·μm | 56 | 61 | 62 |
| Number of particles | | | 3 | 6 | 7 |
| Thickness of support membrane | | μm | 142 | 143 | 145 |
| Thickness of support layer | | μm | 51 | 53 | 54 |
| Pure water permeation coefficient | | $\times 10^{-9}$ m$^3$/m$^2$·s·Pa, 25°C | 0.7 | 1.7 | 1.4 |
| Flux | | m$^3$/m$^2$·d | 0.15 | 0.21 | 0.24 |
| Salt removal property | | % | 90.2 | 93.4 | 93.2 |

<Examples 5 to 8>

Composite semipermeable membranes were obtained in the same manner as Example 1 except that HP-4051 was added at a proportion shown in Table 3 as an additive. The membrane performances of the obtained composite semipermeable membranes are shown in Table 3.

[Table 3]

| | | Unit | Comparative Example 1 | Example 5 | Example 6 | Example 7 | Example 8 |
|---|---|---|---|---|---|---|---|
| Resin Lot. | | - | C-1 | C-7 | C-8 | C-9 | C-10 |
| Mixing proportion | A | wt% | 25 | 25 | 25 | 25 | 25 |
| | B-1 | wt% | 75 | 75 | 75 | 75 | 75 |
| Concentration of solution | | wt% | 16 | 16 | 16 | 16 | 16 |
| Concentration of resin | | wt% | 12.0 | 12.0 | 12.0 | 12.0 | 12.0 |
| Mw | | $\times 10^4$ | 10 | 10 | 10 | 10 | 10 |
| Proportion of additives | | Parts by weight | 0.0 | 1.0 | 3.0 | 8.0 | 10.0 |
| Amount of insoluble components | | mg/m$^2$·μm | 56 | 60 | 66 | 72 | 83 |
| Number of particles | | | 3 | 6 | 10 | 16 | 19 |
| Thickness of support membrane | | μm | 142 | 146 | 147 | 143 | 146 |

(continued)

|  |  | Unit | Comparative Example 1 | Example 5 | Example 6 | Example 7 | Example 8 |
|---|---|---|---|---|---|---|---|
| Thickness of support layer |  | $\mu$m | 51 | 56 | 56 | 53 | 55 |
| Pure water permeation coefficient |  | $\times$ $10^{-9}$ m$^3$/m$^2$·s·Pa, 25°C | 0.7 | 1.4 | 1.8 | 2.6 | 3.2 |
| Flux |  | m$^3$/m$^2$·d | 0.15 | 0.25 | 0.29 | 0.46 | 0.49 |
| Salt removal property |  | % | 90.2 | 94.7 | 95.8 | 96.4 | 96.1 |

From Examples 1 to 8, it was found that, by setting the number of particles contained in the support layer to 6 or more, a composite semipermeable membrane with high permeation flux under a low-pressure condition of 0.5 MPa was obtained. According to the present invention, a composite semipermeable membrane, which has a high water permeability even used under a low-pressure condition, is obtained.

Although the present invention has been described in detail with reference to the specific embodiment, it will be apparent to those skilled in the art that various changes and modifications can be made without departing from the spirit and scope of the present invention. This application is based on Japanese Patent Application No. 2018-034863 filed on February 28, 2018 and Japanese Patent Application 2018-034864 filed on February 28, 2018, the contents of which are incorporated herein by reference.

Industrial Applicability

The composite semipermeable membrane of the present invention can be particularly used for, for example, desalination of brine and seawater.

Reference Sign List

1: Thermoplastic resin
2: Surface of support layer
3: Rubber particles
11: Pore

**Claims**

1. A composite semipermeable membrane, comprising:

   a substrate;
   a support layer arranged on the substrate; and
   a separation functional layer arranged on the support layer,
   wherein the support layer comprises a thermoplastic resin having a porous structure, and particles,
   the particles are present in the thermoplastic resin and comprises at least one kind of material selected from the group consisting of a diene-based polymer, an acrylic polymer, and an ethylene-based polymer, and
   in a cross-section of the support layer, cut along a thickness direction of the support layer, 6 or more particles are present within an area of 3 $\mu$m in the thickness direction from a surface of the support layer and 3 $\mu$m in a direction along the surface.

2. The composite semipermeable membrane according to claim 1, wherein 9 or more particles are present in the area.

3. The composite semipermeable membrane according to claim 2, wherein 12 or more particles are present in the area.

4. The composite semipermeable membrane according to any one of claims 1 to 3,
   wherein the particles comprise a graft copolymer, and
   the graft copolymer is a polymer of the diene-based polymer and a monomer that is radically polymerizable with the diene-based polymer.

5. The composite semipermeable membrane according to claim 4, wherein the monomer is a vinyl cyanide-based monomer and an aromatic vinyl-based monomer.

6. The composite semipermeable membrane according to claim 5, wherein the monomer is acrylonitrile and styrene.

7. The composite semipermeable membrane according to any one of claims 1 to 6, wherein the thermoplastic resin is a polymer of a vinyl cyanide-based monomer and an aromatic vinyl-based monomer.

8. The composite semipermeable membrane according to claim 7, wherein the thermoplastic resin is a copolymer of acrylonitrile and styrene.

9. The composite semipermeable membrane according to any one of claims 1 to 8, wherein a weight average molecular weight Mw of the thermoplastic resin is 60,000 or more and 140,000 or less.

10. The composite semipermeable membrane according to any one of claims 1 to 9, wherein an amount of insoluble components per volume of the support layer, which is obtained by dissolving the support layer in acetone, is 60 mg/m$^2$·$\mu$m or more.

11. The composite semipermeable membrane according to claim 10, wherein the amount of insoluble components is 66 mg/m$^2$·$\mu$m or more.

12. A production method for the composite semipermeable membrane according to any one of claims 1 to 11, the method comprising:

   a process for forming the support layer including:

   (i) a step of preparing a resin solution comprising the particles and the thermoplastic resin at a weight ratio within a range of 30 : 70 to 50 : 50;
   (ii) a step of coating the substrate with the resin solution; and
   (iii) a step of coagulating the thermoplastic resin by immersing the substrate coated with the resin solution in a coagulation bath, and

   a process for forming the separation functional layer on the support layer formed by the process for forming the support layer.

13. The production method for the composite semipermeable membrane according to claim 12, wherein the resin solution comprises an ethylene-carbon monoxide-(meth)acrylic acid ester copolymer.

Fig.1

Fig.2

**EP 3 760 301 A1**

<table>
<tr><td colspan="2">**INTERNATIONAL SEARCH REPORT**</td><td>International application No.<br>PCT/JP2019/007959</td></tr>
</table>

**A. CLASSIFICATION OF SUBJECT MATTER**
Int.Cl.    B01D69/10(2006.01)i, B01D69/02(2006.01)i, B01D71/24(2006.01)i,
           B01D71/28(2006.01)i, B01D71/42(2006.01)i, C08L51/04(2006.01)i,
           C08L55/02(2006.01)i, C08L101/00(2006.01)i

According to International Patent Classification (IPC) or to both national classification and IPC

**B. FIELDS SEARCHED**

Minimum documentation searched (classification system followed by classification symbols)
Int.Cl.    B01D69/10,  B01D69/02,  B01D71/24,  B01D71/28,  B01D71/42,
           C08L51/04, C08L55/02, C08L101/00

Documentation searched other than minimum documentation to the extent that such documents are included in the fields searched
    Published examined utility model applications of Japan       1922–1996
    Published unexamined utility model applications of Japan     1971–2019
    Registered utility model specifications of Japan             1996–2019
    Published registered utility model applications of Japan     1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-536573 A (POREX CORPORATION) 15 October 2009 & US 2008/0017569 A1 & WO 2007/133609 A2 & EP 1926547 A2 | 1–13 |
| A | JP 2014-506531 A (LANXESS DEUTSCHLAND GMBH) 17 March 2014 & US 2014/0175013 A1 & WO 2012/107510 A1 & EP 2486974 A1 & CN 103370124 A | 1–13 |
| A | JP 7-213879 A (MITSUBISHI RAYON CO., LTD.) 15 August 1995 & US 5746916 A & EP 665049 A1 & DE 69501337 T2 & TW 336899 B | 1–13 |

☐ Further documents are listed in the continuation of Box C.       ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>    15 May 2019 (15.05.2019) | Date of mailing of the international search report<br>    28 May 2019 (28.05.2019) |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H576740 A
- JP 2009233666 A
- JP S61222506 A
- JP 2000296317 A
- WO 2014192883 A
- JP 2018034863 A
- JP 2018034864 A

**Non-patent literature cited in the description**

- *Office of Saline Water Research and Development Progress Report,* 1968